(19) Europäisches Patentamt
European Patent Office
Office européen des brevets

(11) **EP 0 503 116 B2**

(12) **NEUE EUROPÄISCHE PATENTSCHRIFT**

(45) Veröffentlichungstag und Bekanntmachung des Hinweises auf die Entscheidung über den Einspruch:
**19.11.1997   Patentblatt 1997/47**

(51) Int Cl.⁶: **F22B 37/10**

(45) Hinweis auf die Patenterteilung:
**14.06.1995   Patentblatt 1995/24**

(21) Anmeldenummer: **91103866.9**

(22) Anmeldetag: **13.03.1991**

(54) **Rohr mit auf seiner Innenseite ein mehrgängiges Gewinde bildenden Rippen sowie Dampferzeuger zu seiner Verwendung**

Tube with a plurality of spiral ribs on his internal wall and steam generator using the same

Tube avec plusieurs nervures hélicoidales sur sa paroi interne et générateur de vapeur en faisant usage

(84) Benannte Vertragsstaaten:
**CH DE DK FR IT LI SE**

(43) Veröffentlichungstag der Anmeldung:
**16.09.1992   Patentblatt 1992/38**

(73) Patentinhaber: **SIEMENS AKTIENGESELLSCHAFT 80333 München (DE)**

(72) Erfinder:
• **Kastner, Wolfgang, Dipl.-Ing. W-8522 Herzogenaurach (DE)**
• **Köhler, Wolfgang, Dr.-Ing. W-8501 Kalchreuth (DE)**
• **Wittchow, Eberhard W-8520 Erlangen (DE)**

(56) Entgegenhaltungen:
CH-A- 218 194          FR-A- 1 157 523
FR-A- 1 288 755        GB-A- 2 007 340
GB-A- 2 102 105

• **Druckschrift von Vallourec Industries: Standards, "Multi-rifled seamless boiler tubes", Mai 1988**

**Beschreibung**

Die Erfindung betrifft ein Rohr mit auf seiner Innenseite ein mehrgängiges Gewinde bildenden Rippen und dessen Einsatz in Dampferzeugern und Wärmeübertragungssystemen. Ein derartiges Rohr ist z.B. aus der FR-A-1 288 755 bekannt.

Innenberippte Rohre werden seit einiger Zeit in Dampferzeugern eingesetzt um hohe Brennkammer-Wärmebelastungen zu beherrschen. So wird in einem Aufsatz "Zwangdurchlaufkessel für Gleitdruckbetrieb mit vertikaler Brennkammerberohrung" von H. Juzi, A. Salem und W. Stocker, veröffentlicht in VGB Kraftwerkstechnik 64, Seite 292 bis 302, auf Seite 294 unter anderem ausgeführt, daß im Bereich hoher BrennkammerWärmebelastung bei glatten Verdampferrohren im weiten Bereich unterkritischer Drücke mit Filmverdampfung zu rechnen ist, daß jedoch andererseits bei innenberippten Rohren die Filmverdampfung auf einen Druckbereich zwischen etwa 206 Bar und dem kritischen Druck beschränkt ist.

Die Filmverdampfung behindert durch den Dampffilm zwischen der metallischen Rohrwand und der flüssigen Phase des Wärmeaufnahmemediums den Wärmeübergang, so daß im Bereich der Filmverdampfung die Rohrwand-Temperatur stark ansteigt. Die Filmverdampfung tritt bei Dampferzeugern mit Zwangdurchlauf des Kühlmediums praktisch nur in dem Bereich auf, in dem die flüssige und die dampfförmige Phase des Kühlmittels gleichzeitig auftreten. Versuche haben bestätigt, daß bei glattwandigen Rohren bereits bei niedrigen Dampfgehalten mit Filmverdampfung zu rechnen ist und daß sich diese bei Verwendung innenberippter Rohre zu höheren Dampfgehalten hin verschiebt. Durch diese Verschiebung wird gleichzeitig das Ausmaß der unerwünschten Temperaturerhöhung der metallischen Rohrwand verringert

Wie sich sowohl aus der genannten Literaturstelle als auch aus dem Bericht von der International Heat Transfer Conference Tokyo September 1974, Paper PGTP 73 - 54, Seiten 14 - 21 ergibt, tritt bei handelsüblichen innengerillten Rohren die erwünschte Verschiebung des Filmsiedens nur bei verhältnismäßig großen Massenstromdichten und hohen Kühlmittelgeschwindigkeiten ein.

Der Erfindung liegt daher die Aufgabe zugrunde, die Geometrie der innenberippten Rohre zu verbessern und ihren Einsatz unabhängig von der Massenstromdichte zu ermöglichen.

Diese Aufgabe wird für Rohre mit auf ihrer Innenseite ein mehrgängiges Gewinde bildenden Rippen gelöst, indem erfindungsgemäß die Steigung h [m] der Rippen etwa gleich dem 0,9-fachen der Wurzel des mittleren Rohr-Innendurchmessers d [m] ist, wobei ein Steigungswinkel $\alpha$ zwischen einer zur Rohrachse senkrechten Ebene und den Flanken der Rippen von etwa 60° ausgeschlossen ist.

Zweckmäßige Weiterbildungen und Ausgestaltungen des erfindungsgemäßen Rohres bestehen darin, daß die radiale Höhe H der Rippen mindestens das 0,04-fache des mittleren Rohr-Innendurchmessers d erreicht, daß der mittlere Rohr-Innendurchmesser d größer als 27 mm ist, daß die Flanken der Rippen in radialer Richtung mit der Rohrachse einen Winkel von 80 bis 90° einschließen, daß der Übergang von den Flanken der Rippen zur Rohrwand jeweils verrundet ist und die frei im Innenraum des Rohres liegenden Kanten der Rippen scharfkantig sind und daß das Rohr aus ferritischem Werkstoff besteht.

Nach anderen vorteilhaften Weiterbildungen der Erfindung umfaßt das Rohr abgesehen von den Rippen einen im Querschnitt kreisrunden Raum und ist gleichzeitig der Rohraußenmantel im Querschnitt elliptisch oder vieleckig oder trägt der Rohraußenmantel mindestens eine Längsrippe, die mit einem Nachbarrohr oder dessen Längsrippe oder einem anderen Bauteil verschweißbar ist. Weitere vorteilhafte Weiterbildungsmerkmale der Erfindung bestehen darin, daß ein Steigungswinkel zwischen einer zur Rohrachse senkrechten Ebene und den Flanken der Rippen kleiner als 60° ist oder daß bei einem mittleren Innendurchmesser d von 30 bis 40 mm, insbesondere einem mittleren Innendurchmesser von 40 mm, der Steigungswinkel 55° beträgt

Zur Verwendung erfindungsgemäß gestalteter Rohre in einem fossil beheizten Dampferzeuger ist eine Vielzahl gleichwirkender Rohre zu Wänden einer Brennkammer verschweißt und bildet einen Teil des Dampferzeugers, wobei die Rohre vertikal angeordnet sind.

Beim Einsatz erfindungsgmäßer Rohre in einem solar beheizten Dampferzeuger sind die Rohre vorteilhafterweise horizontal oder geneigt angeordnet.

Weitere Einsatzmöglichkeiten des erfindungsgemäßen Rohres sind im Anspruch 14 angegeben.

Erfindungsgemäß gestaltete und eingesetzte Rohre sind sehr vorteilhaft, weil sie niedrige axiale Strömungsgeschwindigkeiten ohne schädliches Auftreten von Filmsieden ermöglichen, so daß der Druckverlust des Kühlmittels im Rohr durch Reibung sehr klein ist bei nahezu unverändertem geodätischen Druckverlust. Dadurch tritt gleichzeitig in unerwartet vorteilhafter Art und Weise eine Verringerung der zwischen räumlich parallelen Rohren infolge unvermeidbar ungleicher Wärmeleistung auftretender Temperaturdifferenzen am Rohrende ein. Wie Versuche gezeigt haben, tritt dieser Effekt in zufriedenstellendem Umfang ein, wenn bei einer axialen Strömungsgeschwindigkeit von 1 m/s ein der Rippenform in idealer Weise folgendes Kühlmittel infolge der ihm aufgezwungenen Drallbewegung an seiner Außenseite einer rechnerischen Zentrifugalbeschleunigung ausgesetzt ist, die zweieinhalb mal so groß ist wie die Erdbeschleunigung.

Einige Ausführungsbeispiele der Erfindung sind in einer Zeichnung dargestellt.

FIG 1        zeigt einen Längsschnitt durch ein kurzes Stück eines erfindungsgemäßen Rohres.

FIG 2 bis 6      zeigen je einen Querschnitt durch ein erfindungsgemäßes Rohr.

Ein Rohr, vorzugsweise aus ferritischem Stahl, ist auf seiner Innenseite mit Rippen versehen, deren jede auf einer Schraubenlinie angeordnet ist. Die Rippen schließen mit zur Längsachse des Rohres senkrechten Ebenen einen Winkel a ein. Außerdem haben die Rippen in radialer Richtung eine Höhe H, die mindestens gleich dem 0,04-fachen eines mittleren Innendurchmessers d des Rohres ist, wobei der mittlere Durchmesser d die Rippen in etwa halber radialer Höhe schneidet. Die Schraubenlinien, denen die Rippen folgen, haben eine Steigung h.

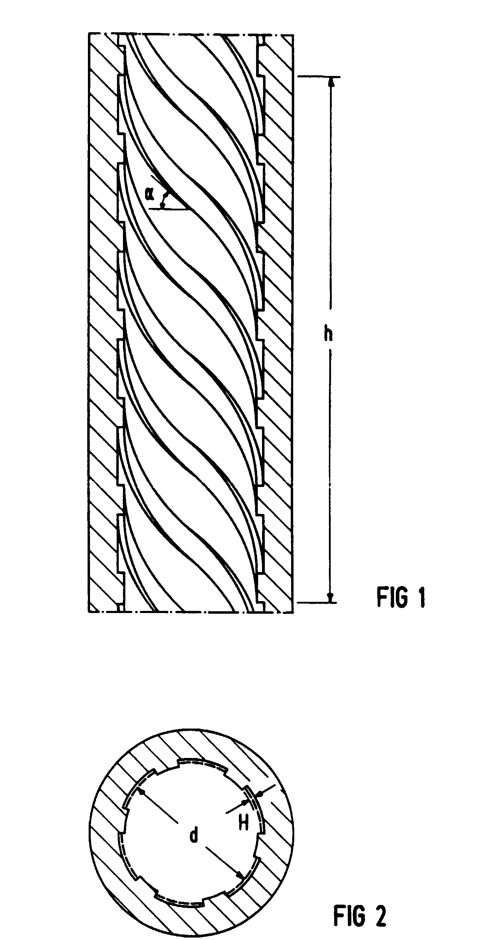

Beim Ausführungsbeispiel gemäß Figur2 ist sowohl der Übergang von der Rohrinnenwand zu den Flanken der Rippen als auch der Übergang von den Flanken der Rippen zu deren dem freien Rohrinnenraum zugewandten Seite annähernd scharfkantig. Der Rohraußenmantel ist bei dieser Ausführung im Querschnitt ebenso wie die Innenwand kreisförmig, so daß die Rohrwand im Querschnitt einen Kreisring darstellt.

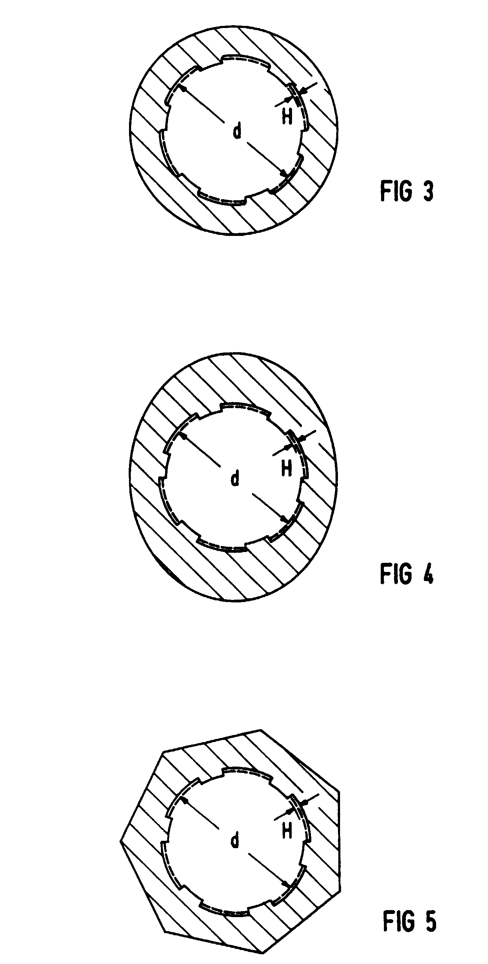

Das Ausführungsbeispiel gemäß Figur 3 weicht von dem gemäß Figur 2 lediglich darin ab, daß der Übergang von der Rohrinnenwand zu den Flanken der Rippen jeweils verrundet ist.

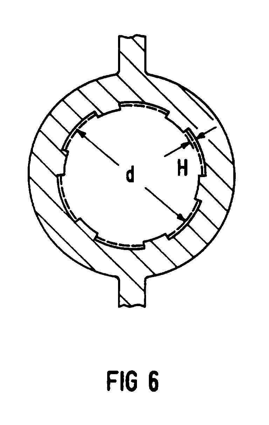

Die Ausführungsbeispiele gemäß der Figuren 4 bis 6 haben eine scharfkantige Ausgestaltung der Rippen entsprechend dem Ausführungsbeispiel gemäß Figur 2. Dagegen ist der Außenmantel des Ausführungsbeispiels gemäß Figur 4 im Querschnitt elliptisch und der Außenmantel gemäß Figur 5 stellt im Querschnitt ein Siebeneck dar. Die Abweichung des Außenmantels von der Kreisform ist in einigen Anwendungsfällen, bei denen nebeneinander stehende oder liegende Rohre auf ihrer gesamten Länge dicht miteinander verschweißt werden, vorteilhaft. Bei der Ausführung gemäß Figur 6 trägt der Außenmantel aus diesem Grund mindestens eine Längsrippe, die mit einem Nachbarrohr oder dessen Längsrippe oder einem anderen Bauteil verschweißbar ist.

Praktische Ausführungen der erfindungsgemäß gestalteten Rohre haben Durchmesser d > 27 mm und die Flanken der Rippen schließen in radialer Richtung vorzugsweise einen Winkel von 80 bis 90° mit der Rohrachse ein. Der Winkel a ist bei erfindungsgemäßen Rohren kleiner als 60° und ist bei einem mittleren Innendurchmesser d von 40 mm vorzugsweise ca. 55° groß.

Bei der Verwendung der erfindungsgemäßen Rohre zum Aufbau eines Zwangdurchlaufkessels, wobei eine Vielzahl gleichwirkender Rohre zu Wänden einer Brennkammer verschweißt ist und einen Teil eines Dampferzeugers bildet, stehen die Rohre vertikal nebeneinander und sind auf ihrer gesamten Länge gasdicht miteinander verschweißt. Zur Aufnahme eines wesentlichen Teils der in der Brennkammer erzeugten Wärme werden die Rohre von Wasser als Kühlmittel durchströmt. Dieses Wasser soll bestimmungsgemäß verdampft werden, so daß zwangsweise ein Gebiet geschaffen wird, in dem innerhalb der Rohre Wasser und Wasserdampf gleicher Temperatur und gleichen Drucks nebeneinander existieren. Dabei steigt der Dampfgehalt in der Mischung von 0 bis auf 100% an.

Durch die auf der Innenseite der Rohre vorgesehenen Rippen erfährt das strömende Wasser einen Drallimpuls, wodurch der axialen Strömung eine Drehung des Wasserkörpers um die eigene Achse überlagert wird. Bei bisher üblichen Anwendungen wird die axiale Strömungsgeschwindigkeit des Kühlmediums auf einige Meter je Sekunde eingestellt und dadurch die Ausbildung eines Dampffilms zwischen der Rohrinnenwand und dem Wasserkörper in Richtung auf hohe Dampfgehalte des Gemisches hin verschoben. Bei diesen hohen axialen Strömungsgeschwindigkeiten treten derartige Dampffilme, auch "Filmsieden" genannt, etwa in dem Bereich auf, in dem das Kühlmittelgemisch zu 80% aus Dampf und zu 20% aus Flüssigkeit besteht. Infolge der hohen axialen Strömungsgeschwindigkeit treten jedoch durch eine entsprechend hohe Reibung des Kühlmittels an den Rohrwänden hohe Druckverluste zwischen der Einspeisestelle des Kühlmittels in die Rohre und dem Austritt des Dampfs aus den Rohren auf. Dies hat sich als sehr nachteilig erwiesen, weil durch den durch Reibung verursachten Druckverlust die Temperaturunterschiede der aus den einzelnen Rohren austretenden Dampfströme vergrößert werden.

Überraschend hat sich nunmehr herausgestellt, daß bei vergleichsweise niedrigen axialen Strömungsgeschwindigkeiten und bei einer rechnerischen Zentrifugal beschleunigung des strömenden Mediums in der Gräßenordnung der 2 1/2-fachen Erdbeschleunigung, die bei einer rechnerischen Strömungsgeschwindigkeit von 1 m/s auftritt, die durch Reibung verursachten Druckverluste in den Rohren so klein werden, daß bei nahezu unveränderten geodätisch bedingten Druckverlusten die Temperaturunterschiede der aus den Einzelrohren austretenden Dampfströme unerwartet klein sind.

Mit

$$v \left[ \frac{m}{s} \right] = \text{axiale Strömungsgeschwindigkeit}$$

h[m] = Steigung der Rippen

$$U \left[\frac{1}{s}\right] = \text{Umdrehungen des strömenden Kühlmittels}$$

$$\omega \left[\frac{1}{s}\right] = \text{Winkelgeschwindigkeit des strömenden Kühlmittels}$$

d [m] = mittlerer Innendurchmesser

$$a_z \left[\frac{m}{s^2}\right] = \text{Zentrifugalbeschleunigung}$$

$$g \left[\frac{m}{s^2}\right] = \text{Erdbeschleunigung}$$

läßt sich unter der Annahme einer Geschwindigkeit von v = 1 m/s und einer Zentrifugalbeschleunigung $a_z$ von ca. 2,5 g ein bestimmter Verhältnisbereich für die Steigung h als Funktion f(d) ermitteln.

Unter Vernachlässigung von Schlupf ist

$$v = h.\, U \text{ mit } U = \frac{\omega}{2\pi} \text{ ergibt sich}$$

$$v = h.\frac{\omega}{2\pi} \rightarrow \omega = \frac{2\pi v}{h}$$

da

$$a_z = \frac{d}{2}\omega^2 \rightarrow \text{ ist es auch}$$

$$= \frac{d}{2}\left(\frac{2\pi v}{h}\right)^2$$

mit

$$a_z \geq 2,5\, g \text{ und } v = 1\left[\frac{m}{s}\right] \text{ folgt}$$

$$2,5g \leq \frac{d}{2}\left(\frac{2\pi.1}{h}\right)^2 = \frac{d.4.\pi^2}{2.h^2}$$

$$h^2 \leq \frac{d.4.\pi^2}{2.2,5.g}$$

$$h \leq \frac{2.\pi}{\sqrt{5g}}.\sqrt{d} = 0,897\ \sqrt{d} \approx 0,9\ \sqrt{d}$$

Bei Verwendung von Rohren, bei denen die Steigung h der Rippen etwa gleich dem 0,9-fachen der Wurzel des mittleren Rohrinnendurchmessers d ist, ist daher bei einer axialen Strömungsgeschwindigkeit von 1 m/s eine rechnerische Zentrifugalbeschleunigung $a_z$ in der Größenordnung von 25 m/s$^2$ zu erwarten, so daß bei Einhaltung dieser durch die Steigung und den Rohrdurchmesser gegebenen Beziehung die oben geschilderte positive Wirkung eintritt.

Diese Gestaltung der Rohre ermöglicht ihren Einsatz nunmehr auch in fossil beheizten Dampferzeugern mit niedrigen Strömungsgeschwindigkeiten des Kühlmittels im Verdampfer.

Die vorteilhaften Eigenschaften der erfindungsgemäßen Rohre lassen sich darüber hinaus auch in solar beheizten Dampferzeugern nutzen, wobei die Rohre allerdings üblicherweise horizontal oder geneigt angeordnet werden.

Auch die Verwendung der erfindungsgemäßen Rohre in Abhitzedampferzeugern oder Wärmetauschern oder in Dampferzeugern zur Aufnahme von Nachzerfallswärme in Kernkraftwerken ist häufig vorteilhaft.

**Patentansprüche**

1. Rohr mit auf seiner Innenseite ein mehrgängiges Gewinde bildenden Rippen,
   **dadurch gekennzeichnet**, daß die Steigung h [m] der Rippen etwa gleich dem 0,9-fachen der Wurzel des mittleren Rohr-Innendurchmessers d [m] ist, wobei ein Steigungswinkel $\alpha$ zwischen einer zur Rohrachse senkrechten Ebene und den Flanken der Rippen von etwa 60° ausgeschlossen ist.

2. Rohr nach Anspruch 1,
   **dadurch gekennzeichnet**, daß die radiale Höhe H der Rippen mindestens das 0,04-fache des mittleren Rohr-Innendurchmessers d erreicht.

3. Rohr nach Anspruch 1 oder 2,
   **dadurch gekennzeichnet**, daß der mittlere Rohr-Innendurchmesser d größer als 27 mm ist.

4. Rohr nach einem der Ansprüche 1 bis 3,
   **dadurch gekennzeichnet**, daß die Flanken der Rippen in radialer Richtung mit der Rohrachse einen Winkel von 80 bis 90° einschließen.

5. Rohr nach einem der Ansprüche 1 bis 4,
   **dadurch gekennzeichnet,** daß der Übergang von den Flanken der Rippen zur Rohrwand jeweils verrundet ist und die frei im Innenraum des Rohres liegenden Kanten der Rippen scharfkantig sind.

6. Rohr nach einem der Ansprüche 1 bis 5,
   **dadurch gekennzeichnet**, daß das Rohr abgesehen von den Rippen einen im Querschnitt kreisrunden Raum umfaßt und daß der Rohraußenmantel im Querschnitt elliptisch oder vieleckig ist oder daß der Rohraußenmantel mindestens eine Längsrippe trägt, die mit einem Nachbarrohr oder dessen Längsrippe oder einem anderen Bauteil verschweißbar ist.

7. Rohr nach einem der Ansprüche 1 bis 6,
   **dadurch gekennzeichnet**, daß es aus ferritischem Werkstoff besteht.

8. Rohr nach einem der Ansprüche 1 bis 7,
   **dadurch gekennzeichnet**, daß ein Steigungswinkel a zwischen einer zur Rohrachse senkrechten Ebene und den Flanken der Rippen kleiner als 60° ist.

9. Rohr nach einem der Ansprüche 1 bis 8,
   **dadurch gekennzeichnet**, daß der mittlere Innendurchmesser d 30 bis 40 mm ist

10. Rohr nach einem der Ansprüche 1 bis 9,
    **dadurch gekennzeichnet**, daß bei einem mittleren Innendurchmesser von 40 mm der Steigungswinkel $\alpha = 55°$ ist

11. Verwendung von innen berippten Rohren nach einem der Ansprüche 1 bis 10, bei einem fossil beheizten Dampferzeuger, **dadurch gekennzeichnet**, daß eine Vielzahl gleichwirkender Rohre zu Wänden einer Brennkammer verschweißt ist und einen Teil eines Dampferzeugers bildet.

12. Verwendung von innen berippten Rohren bei einem fossil beheizten Dampferzeuger nach Anspruch 11, **dadurch**

**gekennzeichnet**, daß die Rohre vertikal angeordnet sind.

13. Verwendung von innen berippten Rohren nach einem der Ansprüche 1 bis 10 bei einem solar beheizten Dampferzeuger, **dadurch gekennzeichnet**, daß die Rohre horizontal oder geneigt angeordnet sind.

14. Verwendung von innen berippten Rohren nach einem der Ansprüche 1 bis 10 bei einem Dampferzeuger, **dadurch gekennzeichnet**, daß er als Abhitzedampferzeuger oder Wärmetauscher dient oder zurAufnahme von Nachzerfallswärme in einem Kernkraftwerk vorgesehen ist.

**Claims**

1. Pipe with ribs forming a multiple thread on its inner side, characterized in that the lead h [m] of the ribs is approximately equal to 0.9 times the root of the average pipe inner diameter d [m], whereby an angle of lead $\alpha$ between a plane perpendicular to the pipe axis and the sides of the ribs of about 60° is excluded.

2. Pipe according to claim 1, characterized in that the radial height H of the ribs is at least 0.04 times the average pipe inner diameter d.

3. Pipe according to claim 1 or 2, characterized in that the average pipe inner diameter d is larger than 27 mm.

4. Pipe according to one of claims 1 to 3, characterized in that the sides of the ribs in the radial direction form with the pipe axis an angle of 80 to 90°.

5. Pipe according to one of claims 1 to 4, characterized in that the transition from the sides of the ribs to the pipe wall is in each case rounded and the rib edges exposed in the interior of the pipe are sharp-edged.

6. Pipe according to one of claims 1 to 5, characterized in that the pipe, apart from the ribs, encompasses an area which is circular in cross section and in that the outer wall of the pipe is elliptical or polygonal in cross section or in that the outer wall of the pipe supports at least one longitudinal rib which can be welded to an adjacent pipe or its longitudinal rib or another component.

7. Pipe according to one of claims 1 to 6, characterized in that it consists of ferritic material.

8. Pipe according to one of claims 1 to 7, characterized in that an angle of lead $\alpha$ between a plane perpendicular to the pipe axis and the sides of the ribs is smaller than 60°.

9. Pipe according to one of claims 1 to 8, characterized in that the average inner diameter d is 30 to 40 mm.

10. Pipe according to one of claims 1 to 9, characterized in that with an average inner diameter of 40 mm the angle of lead is $\alpha = 55°$.

11. Use of pipes ribbed on the inside according to one of claims 1 to 10, with a fossil-heated steam generator, characterized in that a plurality of pipes operating in the same way are welded to walls of a combustion chamber and form a part of a steam generator.

12. Use of pipes ribbed on the inside with a fossil-heated steam generator according to claim 11, characterized in that the pipes are arranged vertically.

13. Use of pipes ribbed on the inside according to one of claims 1 to 10 with a solar-heated steam generator, characterized in that the pipes are arranged horizontally or at an angle.

14. Use of pipes ribbed on the inside according to one of claims 1 to 10 with a steam generator, characterized in that it serves as a waste-heat steam generator or heat-exchanger or is provided to absorb afterheat in a nuclear power station.

**Revendications**

1. Tube comportant, sur une face intérieure, des nervures formant un filetage à plusieurs filets, caractérisé par le fait que le pas h [m] des nervures est égal approximativement à 0,9 fois la racine carrée du diamètre intérieur moyen d [m] du tube, un angle $\alpha$ d'inclinaison que font un plan perpendiculaire à l'axe du tube et les flancs des nervures d'environ 60° étant exclu.

2. Tube suivant la revendication 1, caractérisé par le fait que la hauteur radiale H des nervures est égale à au moins 0,04 fois le diamètre intérieur moyen d du tube.

3. Tube suivant la revendication 1 ou 2, caractérisé par le fait que le diamètre intérieur moyen d du tube est supérieur à 27 mm.

4. Tube suivant l'une des revendications 1 à 3, caractérisé par le fait que les flancs des nervures font, dans la direction radiale, un angle compris entre 80 et 90° avec l'axe du tube.

5. Tube suivant l'une des revendications 1 à 4, caractérisé par le fait que la jonction des flancs des nervures avec la paroi du tube est arrondie et que les bords des nervures, qui sont disposés librement dans l'espace intérieur du tube, sont à arête vive.

6. Tube suivant l'une des revendications 1 à 5, caractérisé par le fait qu'indépendamment des nervures, le tube entoure un espace circulaire en coupe transversale et que la surface latérale extérieure du tube possède, en coupe transversale, une forme elliptique ou polygonale ou que la surface latérale extérieure du tube possède au moins une nervure longitudinale, qui peut être soudée à un tube voisin ou à la nervure longitudinale de ce tube voisin ou à un autre élément.

7. Tube suivant l'une des revendications 1 à 6, caractérisé par le fait qu'il est réalisé en un matériau ferritique.

8. Tube suivant l'une des revendications 1 à 7, caractérisé par le fait qu'un angle d'inclinaison a entre un plan perpendiculaire à l'axe des tubes et les flancs des nervures est inférieur à 60°.

9. Tube suivant l'une des revendications 1 à 8, caractérisé par le fait que le diamètre intérieur moyen d est compris entre 30 et 40 mm.

10. Tube suivant l'une des revendications 1 à 9, caractérisé par le fait que pour un diamètre intérieur moyen de 40 mm, l'angle d'inclinaison est $\alpha = 55°$.

11. Utilisation de tubes portant des nervures intérieures suivant l'une des revendications 1 à 10, dans un générateur de vapeur chauffé par du combustible fossile, caractérisé par le fait qu'une multiplicité de tubes, équivalents, sont soudés à des parois d'une chambre de combustion et forment une partie d'un générateur de vapeur.

12. Utilisation de tubes portant des nervures intérieures dans un générateur de vapeur chauffé par du combustible fossile suivant la revendication II, caractérisée par le fait que les tubes sont disposés verticalement.

13. Utilisation de tubes portant des nervures intérieures suivant l'une des revendications 1 à 10 dans un générateur de vapeur chauffé par l'énergie solaire, caractérisée par le fait que les tubes sont disposés horizontalement ou sont inclinés.

14. Utilisation de tubes, portant des nervures intérieures, suivant l'une des revendications 1 à 10 dans le générateur de vapeur, caractérisée par le fait qu'il est utilisé en tant que générateur de vapeur à récupération de chaleur perdue ou en tant qu'échangeur de chaleur ou est destiné à absorber de la chaleur résiduelle de désintégration d'une centrale nucléaire.

FIG 1

FIG 2

**FIG 3**

**FIG 4**

**FIG 5**

FIG 6